Europäisches Patentamt

European Patent Office

Office européen des brevets

(19)

(11) Publication number: **0 380 266**

**A1**

(12) # EUROPEAN PATENT APPLICATION

(21) Application number: 90300631.0

(22) Date of filing: 22.01.90

(51) Int. Cl.5: **B01D 35/06, B01D 61/14, B01D 65/02**

(30) Priority: 25.01.89 GB 8901581

(43) Date of publication of application:
01.08.90 Bulletin 90/31

(84) Designated Contracting States:
**BE CH DE DK ES FR GB GR IT LI NL SE**

(71) Applicant: **ALCAN INTERNATIONAL LIMITED**
**1188 Sherbrooke Street West**
**Montreal Quebec H3A 3G2(CA)**

(72) Inventor: **Davidson, Alexander Philip, Wood**
**Farm House**
**Whichford, Shipston-on-Stour**
**Warwickshire, CV36 5PG(GB)**
Inventor: **Thomas, Michael Patrick**
**Welton Cottage, Barn Cottages**
**Milton, Banbury, Oxon, OX15 4HH(GB)**
Inventor: **Summers, Steven William**
**3 Church End, Radford Semele**
**Leamington Spa, Warwickshire, CV31**
**1TA(GB)**
Inventor: **Butler, Colin**
**15 Farm Style, Upper Boddington**
**Daventry, Northamptonshire NN11 6DQ(GB)**

(74) Representative: **Pennant, Pyers et al**
**Stevens, Hewlett & Perkins 5 Quality Court**
**Chancery Lane**
**London, WC2A 1HZ(GB)**

(54) **Filter cleaning.**

(57) A filter comprises a composite membrane of an electrically conducting sheet, e.g. a woven mesh of metal filaments, and a porous or microporous layer, e.g. of organic polymer or of partly sintered inorganic particles. The layer may overlie the sheet or be co-planar with it. An electric current is passed through the process liquid between the sheet and a counter electrode, and acts to loosen filter cake. Particularly when operated in a cross-flow mode, with intermittent imposition of electric current, the filter has an increased service life.

EP 0 380 266 A1

# FILTER CLEANING

This invention is concerned with filters incorporating an electrically conducting component. PCT Application WO87/01694 describes porous membranes comprising a non-electrically conducting porous support layer and an overlying electrically conducting microporous layer composed of mixed metal oxides. The membranes are said to be suitable for use in electro-ultrafiltration, in which purification is effected on the basis of both molecular size and charge. French Patents 1440105 and 2587231 contain related disclosure.

EPA 165744 describes a porous electrically conducting filter membrane which is periodically cleaned by application of an electric current to generate gas within the pores of the filter, and across the whole surface of the membrane, and so remove particulate matter blocking the pores. Examples of filters are stainless steel mesh or sintered stainless steel microporous graphite membranes and conducting ceramic microfiltration and ultrafiltration membranes such as doped titania or zirconia. It is difficult to design filter membranes which have a large number of pores of uniform size without cracks and pinholes and which are nevertheless thin enough to allow adequate fluid flow through them and resistant to chemical, mechanical and thermal damage. To require that the membrane be formed of electrically conducting material merely adds to these difficulties. This invention is based on the realisation that filters having useful properties can be made by incorporating an electrically conducting component, without the need to make the porous part of the filter electrically conducting.

There are several publications concerned with the technique of electro-ultrafiltration in which the ultrafilter constitutes one of the electrodes. These publications comprise:

GB 1 368 627

US 3 945 900

Journal of Chemical Engineers of Japan, Vol 16, No. 4, August 1983, pages 305-31.

Journal of Membrane Science, Vol 38, No. 2, August 1988, page 147-159.

Electro-ultrafiltration involves separating normally aqueous solvent from normally high molecular weight solute. The solute molecules are of such size that this movement in the process liquid is dominated by electric charge rather than mass. A continuous electrical current is applied to the process liquid and is partly or wholly responsible for causing solute molecules to move towards or away from the filter.

The present invention comprises apparatus and method aspects which are characterised over this prior art in somewhat different ways.

In one aspect, the invention provides a filtration apparatus comprising a first chamber having an inlet thereto for inflow of an electrically conducting process liquid; a second chamber adjacent the first chamber and separated therefrom by a filter, the second chamber having an outlet therefrom for outflow of filtered process liquid; a first electrode and a counter electrode positioned to be in contact with the process liquid in use of the apparatus; and means for passing an electric current through the process liquid as electrolyte between the first electrode and the counter electrode,
characterised in that the filter comprises an electrically conducting sheet having pores with an average size of 5 $\mu$m to 5mm and a porous or microporous layer having an average pore size of at least 0.01 $\mu$m but less than half that of the sheet, and the electrically conducting sheet constitutes the first electrode.

The average pore size of the layer is at least 0.01 $\mu$m, preferably at least 0.05 $\mu$m thick. Particles large enough to be retained by such a filter layer are suspended or dispersed in a liquid, rather than being dissolved in it, and are too large to be transported efficiently by imposing an electric current.

In another aspect, the invention provides a method of cleaning a filter during use of the filter in the filtration treatment of an electrically conducting process liquid , by the steps of establishing an electrochemical cell comprising a first electrode, a counter electrode, and an electrolyte constituted by the process liquid, and operating the cell, preferably intermittently, to electrolyse the electrolyte thereby to effect cleaning of the filter,
characterised by using a filter comprising an electrically conducting sheet having pores with an average size of 5 $\mu$m to 5 mm and a porous or microporous layer having an average pore size less than half that of the sheet, and the electrically conducting sheet constitutes the first electrode.

The electric current used is sufficient to electrolyse the electrolyte by creating charged species in the vicinity of the filter. Preferably, the electric current is sufficient to generate gas bubbles in the electrolyte in the vicinity of the filter. The electric currents required are greater than are used for electro-ultrafiltration.

When an asymmetric ultrafiltration membrane incorporating a metal mesh support is used in the method of the invention, gas bubbles are produced, without apparently damaging the membrane, and emerge from the large pore side of the membrane. It may therefore be advantageous to position such asymmetric membranes with the large pore side facing upstream.

The filter preferably comprises a composite membrane including an electrically conducting sheet, which is preferably of metal. The sheet may be of sintered particles, or foil with holes through it, or expanded metal mesh, or continuous filaments which may be aligned or random and woven or non-woven. Preferably the sheet is of a woven mesh of metal filaments having interstices therebetween. (Interstices are regarded as pores having cross-sectional dimensions (pore size) which are typically comparable with or greater than their lengths). The sheet pore size is important, as it affects the anti-fouling properties of the filter. If the pore size is too large because the filaments are spaced too far apart, there may be regions of the filter between the pores that are not susceptible to cleaning. In some cases, the electrically conducting sheet may be supported by the porous or microporous layer. More usually, the sheet also acts as a mechanical support, either integral or separate, for the porous or microporous layer of the filter. In these cases also, a sheet with an excessively large pore size may give rise to a filter which is prone to crack or fail between the mesh filaments. The sheet pore size is preferably from 10 to 1000 μm, particularly from 20 to 500 μm. Woven stainless steel mesh with pore sizes spanning these ranges is commercially available.

The porous or microporous layer may be organic, e.g. of synthetic polymer or cellulose derivative, or inorganic, e.g. of refractory metal oxide such as alumina or zirconia. It may be suitable for performing ultrafiltration (pore size from 1 nm to 200 nm) or microfiltration (pore size from 0.05 μm to 3 μm) or particle filtration (pore size above 2 μm). The porous or microporous layer may be formed by any known technique and thereafter laid on the conducting sheet, which may act as a mechanical support.

More preferably, the porous or microporous layer may be formed on and in the interstices of the conducting sheet. This may be achieved by applying a film-forming solution or organosol of a suitable organic material to the sheet. Techniques for doing this have been known for many years, and are described for example in U.S. patent 1693890; 1720670; and 2944017.

Alternatively, the porous or microporous layer may be of inorganic material. In one embodiment, the layer may be of sintered non-metallic particles , for example titania, alumina, ceria, zirconia, lead zirconate titanate (PZT) , silica, mullite, refractory metal oxide generally, and mixtures thereof. Such layers can be formed by techniques generally known, e.g. as described in EP 348031 and EP 344961, by applying a suspension of the particles or precursors thereof to the sheet, dewatering the suspension, and heating the resultant layer to a temperature to partially sinter the particles. Where the particles are of sub-micron size, this technique may involve applying a sol to the sheet, converting the sol to a gel and heating the gel. It is necessary that the contact area between the particles and the surfaces of the sheet is sufficiently great for the two to adhere together so that the layer is bound to the sheet. This requirement places an upper limit on the permissible size of the particles. For example, where the sheet is composed of filaments, the particles of the layer should have an average diameter not more than 10% of the average diameter of the filaments. Use of a mixture of different size particles may be valuable in improving adhesion between the layer and the sheet.

When the sheet has interstices, each bridged by a layer of partly sintered non-metallic particles, control over the thickness of the layers can be achieved in part by control over the concentration and viscosity of the suspension or sol prior to application to the sheet. The layer in each interstice needs to be self-supporting, and may preferably have a minimum thickness of at least 0.01 and preferably at least 0.2 μm. Since the portion of the layer bridging one interstice is generally quite independent of the portions bridging neighbouring interstices, each portion may be regarded as a separate film. These films (bridging the interstices of the sheet) are generally co-planar with the sheet, such that they are neither compressed nor stretched to any degree when the mesh is bent. In some cases a meniscus effect is observed, by which each film has a minimum thickness in the middle of the interstices, which thickness is generally less than the thickness of the sheet. In other cases, the microporous or porous layer potential may be as thick as or thicker than the electrically conducting sheet.

It is preferred that the sheet has a coefficient of linear expansion at least as great as, and desirably greater than, that of the inorganic films. This feature has the following consequence. The composite membrane first comes into existence at an elevated temperature at which it is heated to convert a gel to a film or to sinter particles into a film. On subsequent cooling, the sheet shrinks faster than the films, with the result that the films are under compression. As a result, any cracks that do develop in the films bridging the interstices due to damage or deformation, tend to close rather than to propagate.

The layers or films can be formed on the sheet by deposition of a concentrated solution, sol or suspension followed by air drying. Various techniques including brush, spray, spin-coating, electrophoretic and thermophoretic techniques, and particularly dipping, may be used to apply the fluid to the sheet. After air drying, in the case of inorganic layers, the membrane needs to be heated, typically to at least 400°C.

Alternatively, the electrically conducting sheet and the porous or microporous layer may each be made separately. The layer is then superimposed on the sheet, or the sheet is superimposed on the layer, for use in the invention.

Cleaning of the resulting filter is effected by passing a current between the conducting sheet and a counter-electrode, using the process liquid as electrolyte. The term process liquid is used to include the fluid both before and after passage through the filter, so that the counter-electrode may be positioned either upstream or (less preferably) downstream of the filter. The process liquid is generally aqueous. If necessary, its electrical conductivity may be improved by the addition of an ionic material. The electric current may be AC or DC in either sense, as may be found most satisfactory by trial and error in any particular filter. Preferably, the passage of electric current results in the generation of gas at the filter which mechanically removes foulant from the pores of the porous layer. However it may be possible to use a smaller amount of electricity sufficient to create charged species in or adjacent the pores which tend to loosen the filter cake on the surface of the filter. Loosened filter cake can then be removed by maintaining turbulent conditions in the process liquid at the upstream surface of the filter. It is surprising that generation of electric charge in the conducting sheet, at a site removed from the pores of the porous or micro porous layer, is effective to unblock those pores. It was also not predictable that conducting sheet which had been dipped in and completely coated with the material forming the porous layer, is nevertheless capable of passing an electric current through the process liquid to a counter electrode. If desired to improve conductivity, one surface of the filter may be scraped to remove overlying material and expose bare metal of the sheet.

The electric current may be passed in intermittent pulses, with each pulse designed to effect a temporary cleaning of the filter. The optimum amount of energy per pulse varies with circumstances, and is readily determined by routine experiment. In many cases, the optimum energy input will be found to be in the range 100 to 20,000 joules, e.g. 200-5000 joules. In the examples quoted below, electrical pulses of constant magnitude (49V, 4A and 10s, i.e. 1960 J) were used. Electrical pulses may be passed, either when the flux through the filter is found to fall below a predetermined value, or, particularly when the characteristics of the filter are known, at predetermined intervals of time.

The action of electrical pulses to loosen filter cake is preferably accompanied by some form of fluid flow across the upstream surface of the filter to further displace filter cake. This may be achieved by using the filter in a cross-flow mode, or by profiling the upstream filter surface to provide eddies or turbulence in the process liquid.

Reference is directed to the accompanying drawings, in which:

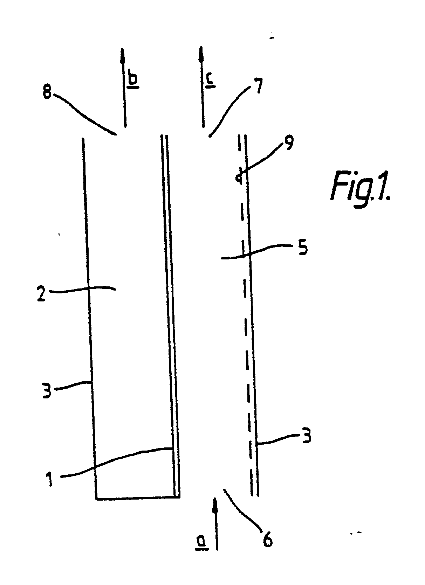

Figure 1 is a schematic diagram of a cross-flow flat-sheet filtration apparatus of the invention;

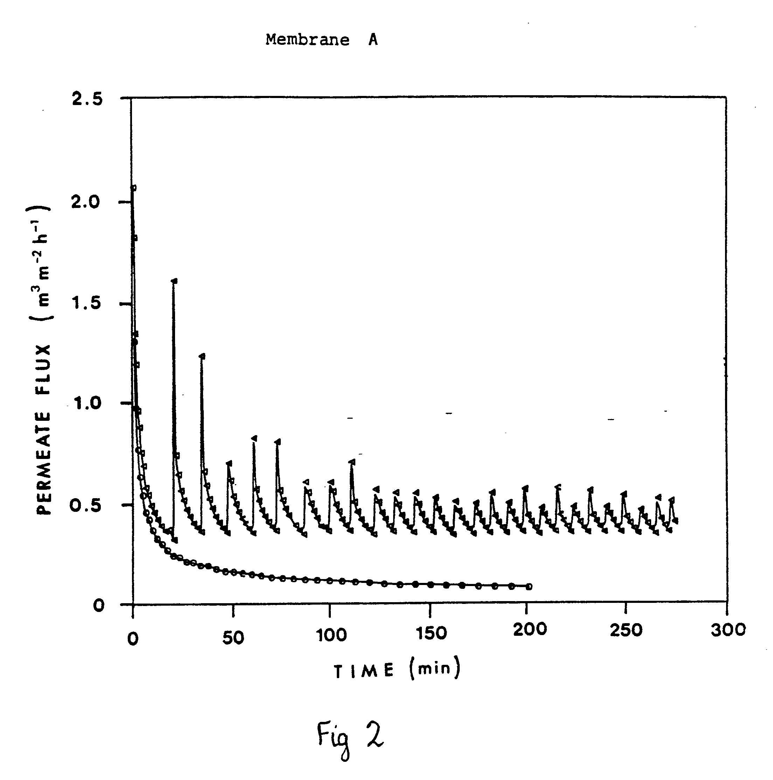

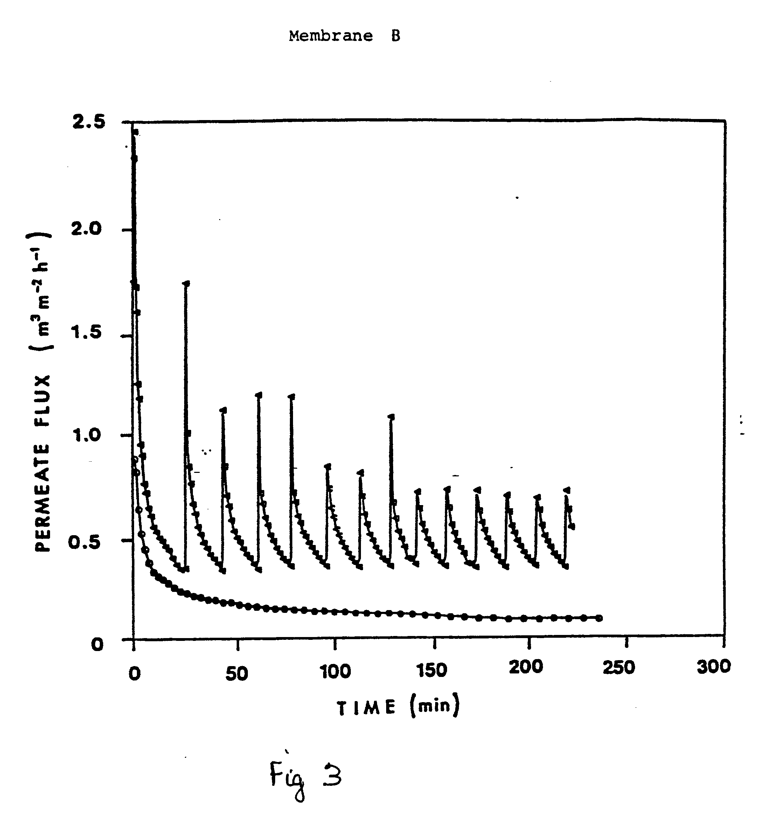

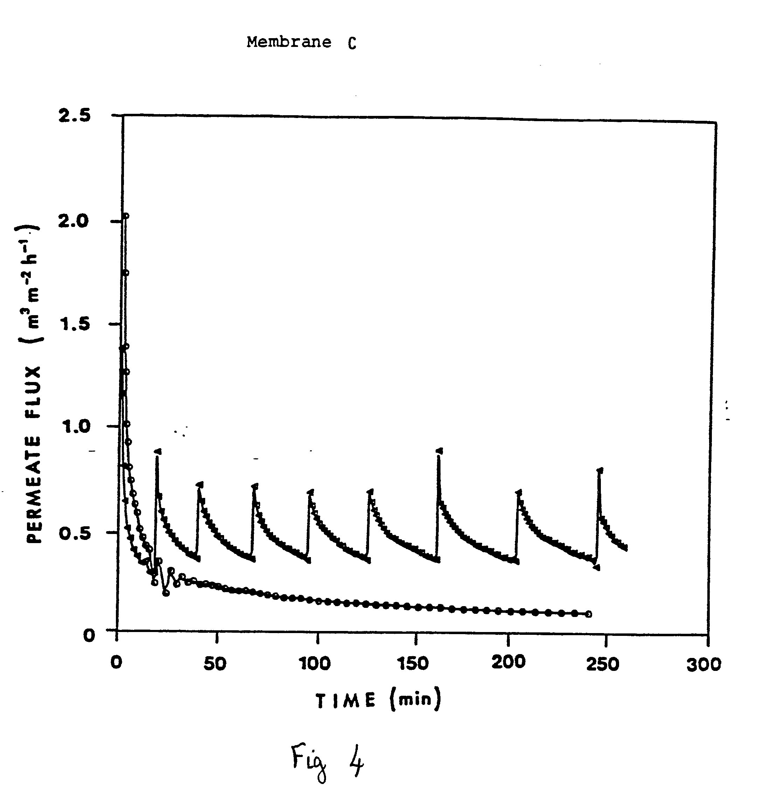

each of Figures 2 to 4 is a graph showing permeate flux decay as a function of time during filtration of $TiO_2$ dispersion with cellulose nitrate coated stainless steel membranes; the round symbol being used for normal filtration and the triangular symbol for electrically enhanced filtration (pulses applied when the permeate flux was less than $0.36m^3m^{-2}h^{-1}$).

Referring to Figure 1, a first flow chamber 5 of a filtration apparatus is defined within a module casing 3 and has an inlet 6 for inflow of electrically conducting process liquid and an outlet 7 for outflow of concentrated process liquid. A second flow chamber 2 is also defined within the module casing 3 and is adjacent to the first chamber 5 and separated therefrom by a flat-sheet microporous filtration membrane 1 comprising an electrically conducting mesh. The second chamber 2 has an outlet 8 for outflow of filtered process liquid. A counter electrode 9 is positioned in the first chamber 5 adjacent the wall of the casing 3. The membrane 1 is connectable to one pole of a power supply, and the counter electrode 9 to the other pole of the power supply, by means not shown.

In operation of the apparatus, an aqueous electrically conducting process liquid to be filtered is passed continuously into the first chamber 5 via inlet 6 as shown by arrow a and thence through the membrane 1. Filtered process liquid thereby passes into the second chamber 2 and flows out of the apparatus via outlet 8 as shown by arrow b. The solid content of the process liquid is either retained on the surface of the membrane to constitute foulant material or passes from the first chamber 5 via outlet 7 together with process liquid that has not passed through the membrane 1 as shown by arrow c.

When it is desired to remove foulant material from the membrane 1, a potential difference is applied between the membrane 1 and the counter electrode 9. The liquid in the first chamber 5 is electrolysed giving rise to bubbles at the surface of the membrane 1 which force the foulant material therefrom. The foulant material is thence removed from the first chamber 5 in the direction shown by the arrow c. Application of the potential difference may be discontinued as soon as the membrane 1 is sufficiently cleaned of foulant material.

Alternatively, the membrane 1 may be tubular, with either the first chamber 5 cylindrical and the second

4

chamber 2 annular, or the first chamber 5 annular and the second chamber 2 cylindrical. When turbulent conditions are maintained in the first chamber 5, the orientation of the membrane may not be important, but is preferably either vertical or with the upstream side facing upwards.

Alternatively, the outlet 7 may be closed, in which case the device operates, not in a cross-flow mode with process liquid flowing across the upstream face of the filter, but in a dead end mode with little or no flow across the upstream face of the filter.

The following examples illustrate the invention.

## EXAMPLE 1

### EXPERIMENTAL

10 g of cellulose nitrate was dissolved in 133 ml of methyl acetate and to the resulting solution was added 48 ml ethanol, 13 ml propan-2-ol , 3.7 ml water and 2.3 ml glycerol.

A stainless steel mesh rectangle (11 x 3.5 cm) was lowered horizontally onto the surface of the solution, prepared as above, so as to allow surface tension to carry liquid into the mesh. The coated mesh was careful ly removed after five seconds and suspended to allow the membrane to dry horizontally at room temperature. Three membranes were made as follows:

A) 100 mesh stainless steel was coated with a solution at a solvent ratio of 1/1.

B) 100 mesh stainless steel was coated with a solution at a solvent ratio of 1/3.

C) 70 mesh stainless steel was coated with a solution at a solvent ratio of 1/2.

The resulting membrane was placed in a cross-flow filtration unit, in which the effective working area of the membrane was 20 cm$^2$, constructed so that the membrane could be made the cathode of an electrolytic cell.

Three litres of $TiO_2$ dispersion ($5gl^{-1}$ $TiO_2$, $pH = 9.0 \pm 0.1$, particle size about 0.2 $\mu$m, $10^{-2}M$ $KNO_3$ and $T = 20 \pm 1°C$) were used as process feed in all experiments. These dispersions were prepared in a 10l plastic reservoir and recycled at a rate of ca. $4lmin^{-1}$, without passing through the membrane module, for 30 minutes before the experiments were begun. In all experiments the process feed was pumped into the module and across the face of the membrane at constant cross-flow velocity ($1 . 15ms^{-1}$) and constant transmembrane pressure (20psi). The slightly concentrated outflow was recycled to the reservoir. The permeate rate was measured using two calibrated tubes and an automated level sensing system before it was recycled too.

For each membrane a normal filtration experiment where the permeate flux decay was monitored automatically without attempting to modify it was performed. Subsequently, the membranes were cleaned by soaking them in an ultrasonic bath for 15 minutes before an electrically enhanced filtration experiment was carried out. In the latter experiments an electric pulse of constant magnitude (49V, 4A and 10S) was applied between the two electrodes (membrane and platinised titanium sheet) of the filtration module whenever the permeate flux fell below $0.36m^3m^{-2}h^{-1}$. The long duration of the experiments ($>200min$) allowed monitoring the long term fouling behaviour of the membrane as well as the long term effect on in-situ intermittent electrolytic membrane cleaning (IIEMC).

### RESULTS AND DISCUSSION

Typical data for the cross-flow microfiltration of $TiO_2$ dispersions ($5gl^{-1}$ $TiO_2$) using the three polymer coated stainless steel grids (membranes A, B and C) are shown in Figures 2 to 4. They show the variation with time of the permeate fluxes across the membranes during normal and electrically enhanced filtration experiments. In all cases the curve of lower permeate flux corresponds to normal filtration, where no membrane cleaning is applied, and the curve of higher permeate flux shows how IIEMC reduces membrane fouling. After an electrical pulse is applied the permeate flux usually increases sharply and falls off rapidly until a new pulse is applied when the permeate flux is less than $0.36m^3m^{-2}h^{-1}$. IIEMC allows to maintain the permeate flux of the membranes above $0.36m^3m^{-2}h^{-1}$ during the whole length of the experiments. However, in the case of some other membranes (results not given) the flux was higher than $0.36m^3m^{-2}h^{-1}$ only during the first stages of the electrically enhanced filtrations experiments; after a while, even though electrical pulses were applied every time 23ml of filtrate were collected, the permeate flux was always lower than $0.36m^3m^{-2}h^{-1}$.

It is important to note that during the initial stages of all filtration experiments (ca. 5min) and just after electrical pulses were applied (ca. time to collect 46ml of filtrate) the permeate had a slightly milky aspect due probably to small $TiO_2$ particles getting through the membrane. During the whole electrically enhanced filtration experiment with membrane the permeate had a strong milky appearance which indicated that significant amounts of $TiO_2$ particles were passing through the membrane.

The total filtration time, volume of filtrate collected and average permeate flux for normal filtration experiments and electrically enhanced experiments are shown in Tables 1 and 2 respectively. Table 2 also contains the power consumption per unit volume of permeate collected during electrically enhanced filtration. In all cases application of IIEMC resulted in average membrane permeate fluxes substantially greater than for normal filtration. For example, the average permeate flux for 100 mesh grids increased by a factor of 1.9 and 3.3 for membranes A and B. The power consumption when IIEMC was applied was significantly smaller for membrane B ($1.90kwh$ $m^{-3}$) than for membrane A ($3.42kwh$ $m^{-3}$). This indicates that the performance of membrane B is significantly better than the performance of membrane A. Membrane C had a different behaviour in that the power consumption to achieve a factor of ca. 2.5 improvement in permeate flux using IIEMC was only $1.10kwh$ $m^{-3}$, which is lower than that of membrane B. However, it should be born in mind that the filtrate was less clear for membrane C than for other membranes.

TABLE 1

| Main filtration parameters during normal filtration experiments. Conditions as in text. | | | |
|---|---|---|---|
| Membrane | Filtration time (min) | Total Volume of filtrate (l) | Average permeate flux ($m^3m^{-2}h^{-1}$) |
| A | 214 | 1.619 | 0.235 |
| B | 234 | 1.173 | 0.150 |
| C | 239 | 1.495 | 0.188 |

TABLE 2

| Main filtration parameters during electrically enhanced filtration experiments. Conditions as in text. | | | | |
|---|---|---|---|---|
| Membrane | Filtration time (min) | Total Volume of filtrate (l) | Average permeate flux ($m^3m^{-2}h^{-1}$) | Power consumption ($kwhm^{-3}$) |
| A | 278 | 4.094 | 0.442 | 3.42 |
| B | 220 | 3.680 | 0.500 | 1.90 |
| C | 256 | 3.910 | 0.456 | 1.10 |

EXAMPLE 2

**Orange and Apple Juice Filtration**

Cellulose nitrate membranes were prepared as per Example 1 (A) using a solvent ratio of 1/1. One membrane was used in a cross-flow filtration unit using freshly squeezed orange juice as process liquid. When no electrical pulsing was applied the average flux over a 5 h run was 6.6 $lm^{-2}h^{-1}$. When the

membrane was connected to a power source and pulsed as a cathode in an electrolytic cell (2.5A, 20V for 10s), the average permeate flux was increased to 15.2 $lm^{-2}h^{-1}$. Similarly when English apple juice was used as process liquid, application of pulses (6A, 30V for 10s) caused an increase in average permeate flux from 10.5 $lm^{-2}h^{-1}$ to 33 $lm^{-2}h^{-1}$ over a 3h run.

EXAMPLE 3

A porous membrane consisting of $ZrO_2$ coated on to 100 mesh inconel 600 (details to be found in EP 348041; average pore size 0.2 $\mu m$) was placed in a cross-flow filtration unit and connected to an electrical power source so as to make it the cathode of an electrolytic cell . Baker's yeast (10 $gl^{-1}$; pH = 4.5; 0.01M $KNO_3$) was used as the process liquid in two experiments; the cell was used as a normal cross-flow unit in the first whilst in the second, electrical pulses (4A, 35V, 2s) were applied. The average fluxes of the two were compared; after 100 min run time the pulsed experiment showed a flux which was twice that of the non-pulsed.

EXAMPLE 4

A commercially available cellulose nitrate membrane (Whatman 0.2 $\mu m$) was placed in a cross-flow filtration unit with a 100 mesh stainless steel sheet clamped on top of it. The mesh was connected so as to comprise the cathode in an electrolytic cell.

$TiO_2$ dispersion (5 $gl^{-1}$ $TiO_2$, pH = 9.0, average particle size 0.2 $\mu m$, in 0.01M $KNO_3$) was passed at a cross-flow velocity of 1.15 $ms^{-1}$ and transmembrane pressure of 138 kPa, across the membrane surface covered by the mesh. The cross-flow apparatus was run as stated above in one experiment whilst in a second, electrical pulses were applied whenever the flux fell below 0.8 $m^3m^{-2}h^{-1}$. Application of such pulses enabled the flux to be maintained above that found with no pulsing.

**Claims**

1. A filtration apparatus comprising a first chamber (5) having an inlet thereto (6) for inflow of an electrically conducting process liquid; a second chamber (2) adjacent the first chamber (5) and separated therefrom by a filter (1), the second chamber having an outlet therefrom (8) for outflow of filtered process liquid; a first electrode and a counter electrode (9) positioned to be in contact with the process liquid in use of the apparatus; and means for passing an electric current through the process liquid as electrolyte between the first electrode and the counter electrode,
characterised in that the filter comprises an electrically conducting sheet having pores with an average size of 5 $\mu m$ to 5mm and a porous or microporous layer having an average pore size of at least 0.01 $\mu m$ but less than half that of the sheet, and the electrically conducting sheet constitutes the first electrode.

2. Apparatus as claimed in Claim 1, wherein the sheet has pores with an average size of from 20 to 500 $\mu m$.

3. Apparatus as claimed in Claim 1 or Claim 2, wherein the porous or microporous layer is of organic material.

4. Apparatus as claimed in Claim 1 or Claim 2, wherein the porous or microporous layer is of inorganic material.

5. Apparatus as claimed in Claim 4, wherein the porous or microporous layer has been formed by a sol-gel technique.

6. Apparatus as claimed in any one of Claims 1 to 5, wherein the porous or microporous layer overlies the electrically conducting sheet.

7. Apparatus as claimed in any one of Claims 1 to 6, wherein the electrically conducting sheet is a woven mesh of metal filaments having interstices therebetween.

8. Apparatus as claimed in Claim 7, wherein the woven mesh acts as a support which carries porous or microporous films bridging the interstices and substantially co-planar with the support.

9. A method of cleaning a filter during use of the filter in the filtration treatment of an electrically conducting process liquid, by the steps of establishing an electrochemical cell comprising a first electrode, a counter electrode, and an electrolyte constituted by the process liquid, and operating the cell to electrolyse the electrolyte thereby to effect cleaning of the filter,

characterised by using a filter comprising an electrically conducting sheet having pores with an average size of 5 $\mu$m to 5 mm and a porous or microporous layer having an average pore size less than half that of the sheet, and the electrically conducting sheet constitutes the first electrode.

10. A method as claimed in Claim 9, wherein the cell is operated by passing a current between the first electrode and the counter electrode sufficient to generate gas bubbles in the electrolyte in the vicinity of the filter.

11. A method as claimed in Claim 9 or Claim 10, wherein the porous or microporous layer of the filter has an average pore size of at least 0.01 $\mu$m.

Fig.1.

EP 0 380 266 A1

Membrane  A

Fig 2

Membrane B

Fig 3

Membrane C

Fig 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-3 945 900 (P.R. KLINKOWSKI) * Abstract; claims 5,9,10; figures 1-3; column 1, lines 7-22; column 2, lines 57-60; column 4, lines 30-54; column 6, line 16 - column 7, line 43 * | 1,3,6 | B 01 D 35/06 B 01 D 61/14 B 01 D 65/02 |
| D,X | JOURNAL OF CHEMICAL ENGINEERING OF JAPAN, vol. 16, no. 4, August 1983, pages 305-311, Tokyo, JP; H. YUKAWA et al.: "Cross flow electro-ultrafiltration for colloidal solution of protein" * Abstract; figures 1,3; page 306, column 2, last paragraph * | 1,3,6,7 | |
| D,X | JOURNAL OF MEMBRANE SCIENCE, vol. 38, no. 2, August 1988, pages 147-159, Amsterdam, NL; G.M. RIOS et al.: "Basic transport mechanisms of ultrafiltration in the presence of an electric field" * Abstract; figure 1; page 148, lines 4-12 * | 1,4,7 | |
| Y | IDEM | 2,5,8-11 | TECHNICAL FIELDS SEARCHED (Int. Cl.5) B 01 D |
| D,Y | EP-A-0 165 744 (U.K. ATOMIC ENERGY. AUTH.) * Abstract; figure 1; example 3 * | 9-11 | |
| A | | 1,4 | |
| Y | CH-A- 663 356 (COMM. à L'ENERGIE ATOMIQUE) * Abstract; claims 1,13,14,29,30,33 * | 5 | |

-/-

The present search report has been drawn up for all claims

| Place of search | Date of completion of the search | Examiner |
|---|---|---|
| THE HAGUE | 27-02-1990 | HOORNAERT P.G.R.J. |

EPO FORM 1503 03.82 (P0401)

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 107 081 (DESARES)<br>* Claims 1,4,11,15,16; page 5, lines 5-32; page 9, lines 14-19; page 10, line 12 - page 11, line 19; figures 1-3; table II * & GB-A-1 368 627 (Cat. D) | 2,8 | |
| A | FR-A-2 107 081 | 1,3,6,7 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 27-02-1990 | HOORNAERT P.G.R.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................

& : member of the same patent family, corresponding document

EPO FORM 1503 03.82 (P0401)